# EUROPÄISCHE PATENTSCHRIFT

(11) **EP 2 901 854 B1**
(45) Veröffentlichungstag und Bekanntmachung des Hinweises auf die Patenterteilung: **13.03.2024**
(21) Anmeldenummer: 15000184.0
(22) Anmeldetag: 23.01.2015
(51) Int. Cl.: A01K 15/02

(54) **Hohlkörper**
Hollow body
Corps creux

(30) Priorität: 04.02.2014 DE 202014000903 U
(43) Veröffentlichungstag der Anmeldung: 05.08.2015
(73) Patentinhaber: Schwendinger, Markus, 87752 Schwaighausen (DE)
(72) Erfinder: Schwendinger, Markus, 87752 Schwaighausen (DE)
(74) Vertreter: Torggler & Hofmann Patentanwälte - Rankweil

(56) Entgegenhaltungen:
- EP-A2- 2 255 617
- EP-B1- 2 255 617
- DE-A1-102011 014 173
- DE-U1-202010 015 821
- US-A- 5 542 376
- US-A1- 2002 115 377
- US-A1- 2004 200 434
- US-A1- 2010 147 228
- US-A1- 2013 055 965

## Beschreibung

Die vorliegende Erfindung betrifft einen Hohlkörper, insbesondere geeignet für das Hineinbeißen seitens eines Hundes, mit zumindest einer Außenhülle und zumindest einem von der Außenhülle umgebenen Hohlraum und mit zumindest einer von außen in den Hohlraum hineinführenden Öffnung in der Außenhülle, wobei die Öffnung verschlossen ist und im Hohlraum zumindest ein magnetischer oder magnetisierbarer Körper angeordnet ist.

Hohlkörper dieser Art, welche insbesondere für das mehrfache Hineinbeißen durch einen Hund geeignet sind, sind beim Stand der Technik z.B. aus der EP 2 255 617 B1 bekannt. Sie können in der Hundeausbildung bzw. für das Hundetraining eingesetzt werden, z.B. für die Bestätigung eines Hundes, wenn er eine Übung erfolgreich gemeistert hat. Wie in der EP 2 255 617 B1 bereits ausgeführt, ist es zur Vermeidung von Verletzungen, insbesondere von Zahnverlust, beim Hund wichtig, dass vermieden wird, dass die Zähne des Hundes in die Öffnungen in der Außenhülle des Hohlkörpers eindringen können. Die Öffnung muss nach dem Einführen des Magneten in den Hohlraum der Außenhülle bissfest verschlossen werden, um die genannten Verletzungen bzw. Zahnverluste beim Hund zu vermeiden.

In der EP 2 255 617 B1 wird dies so gelöst, dass man zwei Öffnungen auf einander entgegengesetzten Seiten der Außenhülle vorsieht, durch diese ein Seil, welches gleichzeitig als Griffelement dient, hindurchzieht und die Enden des Seiles jeweils mit einem Knoten versieht. Es sind durch offenkundige Vorbenutzungen in der Zwischenzeit auch Ausgestaltungsformen solcher Hohlkörper bekannt geworden, bei denen die Knoten im Seil auf beiden Seiten unmittelbar an die Öffnung anschließend außen an der Außenhülle anliegen.

Diese bisher bekannte Technologie verhindert bei entsprechend sachgemäßer Ausführung zwar die Verletzung bzw. den Zahnverlust eines Hundes, welcher auf den Hohlkörper beißt. Das sachgerechte Hindurchführen und entsprechend feste Verknoten des Seiles ist bei der Herstellung des Hohlkörpers bzw. Bisskörpers gemäß der EP 2 255 617 B1 und des genannten, durch offenkundige Vorbenutzung bekannt gewordenen Standes der Technik aber relativ aufwendig und damit kostenintensiv.

Die US 2010/0147228 A1 zeigt einen Bisskörper für einen Hund der lösbar mittels eines Stopfens an einem Hundeausbilder oder dergleichen befestigt werden kann. Die US 5,542,376 offenbart ein Spielzeug für Tiere mit einem Ball, in dessen Innenraum ein Magnet angeordnet ist. Die US 2013/0055965 A1 offenbart einen gerüstartig aufgebauten Ball, der von einem Hund in der Art und Weise bewegt werden soll, dass Hundefutter aus einem Innenraum des Balls nach außen fällt.

Die US 2004/0200434 A1 und die US 2002/0115377 A1 offenbaren jeweils ein Spielzeug für Tiere mit einem Hohlkörper, wobei in der Außenhülle des jeweiligen Hohlkörpers zumindest eine Öffnung verbleibt, durch die hindurch beim Spielen Futter abgegeben werden kann. Die DE 10 2011 014 173 A1 offenbart einen mit einem struppigen Überzug umhüllten Gummiball, wobei in die Hülle des Gummiballs eine Druckstimme mittels eines Stopfens eingesetzt werden kann.

Ausgehend von der EP 2 255 617 B1 ist es Aufgabe der Erfindung, eine alternative Art und Weise, wie die Öffnung in der Außenhülle verschlossen werden kann, zur Verfügung zu stellen, wobei es wiederum darum geht, eine Verletzungsgefahr bzw. einen möglichen Zahnverlust für den Hund soweit möglich auszuschließen.

Zur Lösung dieser Aufgabe wird ein Hohlkörper gemäß Patentanspruch 1 vorgeschlagen.

Die erfindungsgemäße Verwendung des Stopfens zum Verschluss der Öffnung ist einerseits eine relativ kostengünstig und einfach montierbare Lösung. Andererseits kann mit dem Stopfen auch sicher verhindert werden, dass der Hund beim Hineinbeißen in den Hohlkörper einen Zahn verliert, der Zahn abbricht oder der Hund anderweitig verletzt wird. Der Stopfen ist gemäß der Erfindung so in der Öffnung angeordnet und an dem die Öffnung umgebenden Rand der Außenhülle befestigt, dass er beim Biss des Hundes auf den Hohlkörper weder in Richtung in den Hohlraum hinein noch in Richtung aus dem Hohlraum hinaus aus seiner Verschlussstellung zum Verschließen der Öffnung herausbewegt werden kann. Diese Befestigung, welche in beide der genannten Richtungen wirkt, wird im Gegensatz zum eingangs genannten Stand der Technik an dem eine einzige Öffnung umgebenden Rand der Außenhülle realisiert. Beim genannten Stand der Technik wird das dort zum Verschluss verwendete Seil an den beiden Rändern, der einander gegenüberliegenden Öffnungen befestigt und muss hierfür durch den Hohlraum des Hohlkörpers hindurchgeführt und anschließend auf beiden einander gegenüberliegenden Seiten entsprechend fest verknotet werden.

Für die Realisierung der Erfindung gibt es verschiedene Varianten. Es kann z.B. vorgesehen sein, dass der die Öffnung verschließende Stopfen am die Öffnung umgebenden Rand der Außenhülle formschlüssig und/oder stoffschlüssig befestigt ist. In besonders bevorzugten Ausgestaltungsformen ist vorgesehen, dass der Stopfen ausschließlich an dem die Öffnung umgebenden Rand der Außenhülle befestigt ist. Günstig ist es auch, wenn der Stopfen unverschiebbar an dem die Öffnung umgebenden Rand der Außenhülle befestigt ist. Es gibt verschiedene Ausgestaltungsformen der Erfindung. Bei diesen ist allerdings jeweils zu bedenken, dass Hunde mit ihrem Gebiss sehr hohe Drücke aufbringen können, sodass der Hohlkörper und insbesondere auch der Verschluss der Öffnung mittels Stopfen entsprechend stabil ausgebildet sein müssen. In einer ersten bevorzugten Ausgestaltungsform der Erfindung ist vorgesehen, dass der Stopfen zwei miteinander verbundene und voneinander beabstandete Krägen aufweist und der die Öffnung umgebende Rand der Außenhülle zwischen den Krägen formschlüssig gehalten ist. Bei dieser Variante sollten der die Öffnung umgebende Rand der Außenhülle und/oder zumindest einer der Krägen des Stopfens günstigerweise so elastisch ausgebildet sein, dass zumindest einer der Krägen des Stopfens durch die

Öffnung hindurch geführt werden kann, wobei bei diesem Hindurchführen der Rand der Außenhülle und/oder der Kragen bzw. der Stopfen entsprechend elastisch deformiert werden können.

Eine Alternative der formschlüssigen Befestigung des Stopfens in der Öffnung sieht vor, dass der Stopfen und/oder der die Öffnung umgebende Rand der Außenhülle zumindest ein Gewinde aufweist bzw. aufweisen und der Stopfen und die Außenhülle mittels des Gewindes formschlüssig aneinander befestigt sind. Es kann dabei sowohl am Stopfen als auch am die Öffnung umgebenden Rand der Außenhülle ein Gewinde vorgesehen sein. Es kann aber auch vorab nur ein Gewinde vorgesehen sein, sodass erst beim Einschrauben des Stopfens das korrespondierende Gewinde hierzu in das entsprechende Teil, also den Stopfen oder den die Öffnung umgebenden Rand der Außenhülle eingeschnitten wird.

Ein bevorzugtes Ausführungsbeispiel einer stoffschlüssigen Befestigung des Stopfens am die Öffnung umgebenden Rand der Außenhülle sieht vor, dass der die Öffnung verschließende Stopfen an den die Öffnung umgebenden Rand der Außenhülle angeklebt oder anvulkanisiert oder in diesen eingeschmolzen ist.

Diese verschiedenen vorab genannten Varianten der Befestigung des Stopfens am die Öffnung umgebenden Rand der Außenhülle können auch miteinander kombiniert werden. So kann z.B. vorgesehen sein, dass der oben genannte Stopfen mit den voneinander beabstandeten Krägen zusätzlich am die Öffnung umgebenden Rand der Außenhülle angeklebt, anvulkanisiert oder in diesen eingeschmolzen wird. Das Gleiche gilt für die Gewindevariante. Es kann weiters z.B. auch vorgesehen sein, dass bei der Gewindevariante zusätzlich zumindest ein Kragen zum formschlüssigen Anliegen des Stopfens am die Öffnung umgebenden Rand der Außenhülle vorgesehen ist. Das Gleiche gilt für die Klebe-, Schmelz- oder Vulkanisiervarianten.

Sowohl im Sinne günstiger Herstellungskosten als auch einer möglichst vollständigen Vermeidung einer Verletzungsgefahr beim Hund sehen besonders bevorzugte Varianten der Erfindung vor, dass der Stopfen ein Kunststoffteil ist. Ein solches Kunststoffteil kann vollständig aber auch nur teilweise aus Kunststoff bestehen. Besteht es nur teilweise aus Kunststoff, so bildet der Kunststoff günstigerweise ein die Außenfläche des Stopfens bildenden Mantel. Es kann sich um ein Monomaterial aber auch um eine Zusammensetzung verschiedener Materialien, insbesondere Kunststoffe, handeln, z.B. um in verschiedenen Bereichen des Stopfens verschiedene Elastizitäten zu realisieren. Besonders bevorzugt handelt es sich beim Stopfen um ein Kunststoffspritzgussteil, also um einen spritzgegossenen Stopfen aus Kunststoff. Diese sind in großen Stückzahlen günstig herstellbar. Bevorzugte Kunststoffe aus denen der Stopfen bestehen oder welche er aufweisen kann, sind z.B. Polyvinylchlorid (PVC), Polypropylen (PP), Polyethylen (PE), Polyamid (PA), Gummi, Ethylen-Propylen-Dien-Kautschuk (EPDM) oder Thermoplastisches Polyurethan (TPU).

Die Außenhülle des Hohlkörpers sollte einerseits so flexibel sein, dass sie beim Hineinbeißen seitens des Hundes eine gewisse Verformung zulässt, um Zahnverletzungen beim Hund zu vermeiden. Andererseits muss sie aber auch so stabil sein, dass sie den bereits genannten sehr hohen Drücken beim Zubeißen des Hundes dauerhaft standhält. Hier kommen grundsätzlich verschiedene Materialien für die Außenhülle in Frage. Besonders bevorzugt ist jedoch vorgesehen, dass die Außenhülle eine Kunststoffhülle oder eine Gummihülle ist oder aus einer Mischung daraus besteht. Bevorzugt wird für eine Kunststoffhülle PVC oder Polyurethan (PU) verwendet. Bei einer Gummihülle, also einer Außenhülle aus Gummi sind natürliche oder künstliche Kautschukmaterialien möglich. Die Wandstärke der Außenhülle sollte abgesehen von der Öffnung günstigerweise im Bereich zwischen 2mm und 1cm, besonders bevorzugt im Bereich zwischen 3mm und 7mm, liegen. Im Sinne einer ausreichenden Standfestigkeit der Außenhülle beim Zubeißen durch den Hund ist es auch günstig, wenn die Außenhülle nahtfrei ausgeführt ist. In bevorzugten Ausgestaltungsformen ist der Stopfen härter als die Außenhülle. Dies kann aber auch anders herum ausgeführt werden. Es ist natürlich auch denkbar, Stopfen und Außenhülle aus dem gleichen oder zumindest gleich hartem Material herzustellen.

Der Hohlkörper kann verschiedenste Außenformen aufweisen. Bezugnehmend auf sein bevorzugtes Einsatzgebiet als Körper zum Hineinbeißen seitens eines Hundes, kann er auch als Bisskörper bezeichnet werden. Besonders bevorzugte Ausgestaltungsformen sehen vor, dass der Hohlkörper ein Ball ist.

Die Erfindung sieht vor, dass der magnetische oder magnetisierbare Körper am Stopfen, vorzugsweise an einem in den Hohlraum hineinreichenden Fortsatz des Stopfens, fixiert ist. Bevorzugt befindet sich der magnetische bzw. magnetisierbare Körper dabei in der Mitte des Hohlraums. Um Fehlpolungen zu vermeiden, ist hier besonders bevorzugt vorgesehen, dass es sich um einen magnetisierbaren Körper handelt, welcher unabhängig von der Polung eines außenliegenden Magneten angezogen werden kann.

Im Gegensatz zur EP 2 255 617 B1 können erfindungsgemäße Hohlkörper vollkommen ohne ein Griffelement ausgeführt sein. Bei Ausgestaltungsformen, bei denen ein solches, vorzugsweise flexibles, Griffelement gewünscht wird, kann aber vorgesehen sein, dass im oder am Stopfen eine Befestigungsvorrichtung zum Befestigen eines außerhalb der Außenhülle anordenbaren, vorzugsweise flexiblen, Griffelements angeordnet ist. Das Griffelement kann als starrer Stab, aber auch flexibel z.B. in Form einer Schnur, eines Seiles oder eines Bandes ausgeführt sein. Das Griffelement kann außerhalb des Hohlkörpers z.B. eine Länge zwischen 10 und 40 cm aufweisen. Insbesondere in seiner flexiblen Ausgestaltungsform kann das Griffelement dazu dienen, den Hohlkörper samt Griffelement dem Hund bei der Bewegung des Hundetrainers als lebendiges Objekt erscheinen zu lassen. Das Griffelement kann aber auch dazu vorgesehen sein, Zerrspiele und dergleichen mit dem Hund durchzuführen. Einfache Befestigungsvorrichtungen des Stopfens können z. B. außerhalb des Hohlkörpers angeordnete Ösen sein, durch die Schnüre, Seile oder Bänder hindurchgeführt sein können. Es kann auch ein durch den Stopfen hindurchführendes Loch als Befestigungsvorrichtung vorgesehen sein, in dem eine Schnur, ein Seil oder ein Band entsprechend befestigt ist. Auch Sacklöcher im Stopfen sind als Befestigungsvorrichtung denkbar. Es kann sich auch um Gewinde, Rastschultern für Rastköpfe oder Rastköpfe an sich und dergleichen handeln. Diese können auch als zerstörungsfrei lösbare Befestigungsvorrichtungen für das Griffelement am Stopfen ausgelegt sein. Hier sind wiederum Schraub- und Klemmverbindungen, Schnappverschlüsse, karabinerartige verschließbare Haken und dergleichen als Beispiele zu nennen.

Erfindungsgemäße Hohlkörper können mittels ihres magnetischen oder magnetisierbaren Körpers, wie in der EP 2 255 617 B1 gezeigt, über die Zuhilfenahme von ein- oder zweiteiligen Trägerkörpern an der Kleidung eines Hundetrainers befestigt werden. Genauso gut können entsprechende Magneten oder entsprechendes magnetisierbares Material in die Kleidung eingenäht sein, in dortigen Taschen angeordnet sein oder dergleichen. Grundsätzlich reicht ein Magnet in der gesamten Anordnung. Dieser kann als magnetischer Körper im Hohlraum, aber auch Teil des Trägerkörpers oder in der Kleidung des Hundetrainers angeordnet sein.

Weitere Merkmale und Einzelheiten bevorzugter Varianten der vorliegenden Erfindung werden in der nachfolgenden Figurenbeschreibung beispielhaft an erfindungsgemäßen Ausgestaltungsformen erläutert. Es zeigen:
Fig. 1 bis 7 verschiedene Ausgestaltungsformen eines Hohlkörpers in Schnittdarstellungen und
Fig. 8 nur die Außenhülle der Beispiele der Fig. 2 bis 7 in Schnittdarstellung.

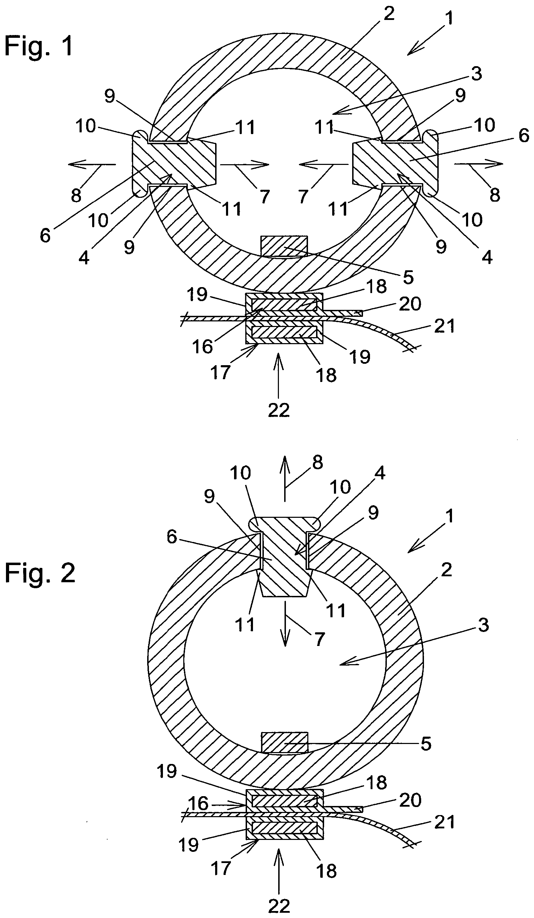

In Fig. 1 ist ein erstes Ausführungsbeispiel eines Hohlkörpers 1 gezeigt. In Fig. 1 wie auch in den anderen Varianten der Fig. 2 bis 7 ist der Hohlkörper 1 ein Ball. Wie eingangs erläutert, kann der Hohlkörper 1 auch ganz andere Formen und insbesondere Außenkonturen aufweisen. Im Ausführungsbeispiel gemäß Fig. 1 weist die den Hohlraum 3 umgebende Außenhülle 2 des Hohlkörpers 1 zwei einander gegenüberliegende Öffnungen 4 auf. Diese verbinden den Hohlraum 3 jeweils mit dem Bereich außerhalb des Hohlkörpers 1, solange sie nicht mit jeweils einem Stopfen 6 verschlossen sind. Dies erlaubt es z.B. die Außenhülle 2 des Hohlkörpers 1 nahtfrei auszubilden. Im Fall, dass der Körper 5 aus magnetischem Material besteht, können z.B. beim Stand der Technik bekannte Permanentmagneten als Körper 5 eingesetzt werden. Im Falle von Körpern 5 aus magnetisierbarem Material kommen alle beim Stand der Technik bekannten, hier verwendbaren magnetisierbaren Materialien, insbesondere Metalle, in Frage. Der Stopfen 6 ist am Rand 9 der Außenhülle 2 in dem Ausführungsbeispiel gemäß Fig. 1 formschlüssig gehalten. Konkret weist der Stopfen 6 in diesem Ausführungsbeispiel hier zwei Krägen 10 und 11 auf, zwischen denen der die Öffnung 4 umgebende Rand 9 der Außenhülle 2 formschlüssig gehalten ist und dies so, dass der Stopfen 6 sowohl bezüglich einer Belastung in Richtung 7 in den Hohlraum 3 hinein als auch einer Belastung in Richtung 8 aus dem Hohlraum 3 hinaus, am die Öffnung 4 umgebenden Rand 9 der Außenhülle 2 befestigt ist. Die formschlüssige Befestigung des Stopfens 6 am Rand 9 der Außenhülle 2 sorgt also dafür, dass der Stopfen 6 weder in Richtung 7 in den Hohlraum 3 hinein noch in Richtung 8 nach außen aus der Öffnung 4 herausgedrückt werden kann. Für das Einführen des Stopfens 6 in die Öffnung 4 sind der Rand 9 der Außenhülle 2 und/oder der Kragen 11 des Stopfens 6 entsprechend elastisch ausgebildet.

Während im Ausführungsbeispiel gemäß Fig. 1 zwei Öffnungen 4 von zwei Stopfen 6 verschlossen sind, ist im ansonsten gleich aufgebauten Ausführungsbeispiel gemäß Fig. 2 vorgesehen, dass nur eine Öffnung 4 in der Außenhülle 2 vorhanden ist, welche mittels nur einem Stopfen 6 in derselben formschlüssigen Art und Weise wie in Fig. 1 verschlossen ist.

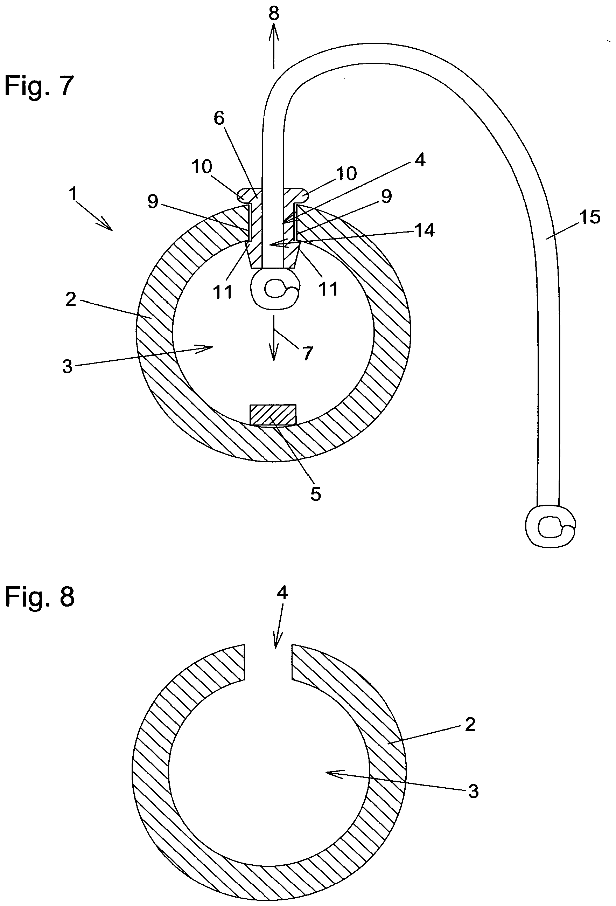

Fig. 8 zeigt die Außenhülle 2 bevor der magnetische oder magnetisierbare Körper 5 in den Hohlraum 3 eingeführt und die Öffnung 4 mittels des Stopfens 6 verschlossen ist. Diese Außenhülle 2 gemäß Fig. 8 kann bei allen Ausführungsbeispielen gemäß der Fig. 2 bis 7 eingesetzt werden.

In den Ausführungsbeispielen gemäß der Fig. 1 bis 4 sowie 6 und 7 ist der magnetische oder magnetisierbare Körper abweichend vom Gegenstand des Patentanspruchs 1 frei beweglich im Hohlraum 3 angeordnet. Hierdurch kann er sich frei ausrichten, um den Hohlkörper 1 in nahezu jeder beliebigen Position an einem außenliegenden Magneten oder magnetisierbaren Material magnetisch zu befestigen. Als außenliegendes Gegenstück zum magnetischen oder magnetisierbaren Körper 5 ist in den Fig. 1 und 2 beispielhaft ein Trägerkörper 22 gezeigt, welcher es erlaubt, den Hohlkörper 1 an einer nahezu beliebigen Stelle an einem Stück 21 der Kleidung eines Hundetrainers oder einer anderen Person zu befestigen. Der in den Fig. 1 und 2 gezeigte Trägerkörper 22 ist aus der EP 2 255 617 B1 bekannt. Es kann zu seiner Beschreibung also auf die entsprechenden Textstellen dieser Schrift verwiesen werden. Es handelt sich hier um einen zweiteiligen Trägerkörper 22 bestehend aus zwei Trägerkörperbauteilen 16 und 17. Diese weisen jeweils einen Magneten 18 oder ersatzweise entsprechendes magnetisierbares Material auf. Diese Magneten 18 bzw. das entsprechende magnetisierbare Material ist zum Schutz der Zähne des Hundes mit einer Schutzhülle 19, vorzugsweise aus Kunststoff oder gummiartigem Material, umgeben. Zumindest an einem der Trägerkörperbauteile 16 und 17 befindet sich vorzugsweise ein Lösegriff 20 zum Trennen der beiden Trägerkörperbauteile 16 und 17. Der Lösegriff 20 ist vor allem dann zu empfehlen, wenn relativ starke Magnete 18 verwendet werden. Zwischen den Trägerkörperbauteilen 16 und 17 wird das Stück 21 der Kleidung eingeklemmt. Im Sinne besonders großer Haltekräfte können sowohl beide Trägerkörperbauteile 16 und 17 einen jeweils eigenen Magneten 18 aufweisen und der Körper 5 auch aus magnetischem Material bestehen. Es ist aber genauso gut möglich, einen der beiden oder sogar beide Magneten 18 durch ein magnetisierbares Teil wie z.B. eine entsprechende Metallplatte zu ersetzen. Das Gleiche gilt für den Körper 5, auch dieser kann aus einem magnetisierbaren Material wie z.B. einem entsprechenden Metallkörper bestehen. In einer Minimalvariante reicht es letztendlich aus, wenn insgesamt nur ein Magnet in der Anordnung vorhanden ist. Günstigerweise weist aber der Trägerkörper 22 zumindest einen Magneten 18 auf.

Als Alternative zu dem hier gezeigten und in der EP 2 255 617 B1 bereits offenbarten Trägerkörper 22 können auch Magnete oder Körper aus magnetisierbarem Material an fixen Stellen in die Kleidung des Hundetrainers oder einer anderen, mit dem Hund arbeitenden Person eingenäht sein. Magnete oder magnetisierbares Materials können natürlich auch in entsprechende Taschen der Kleidung eingesteckt werden oder dergleichen.

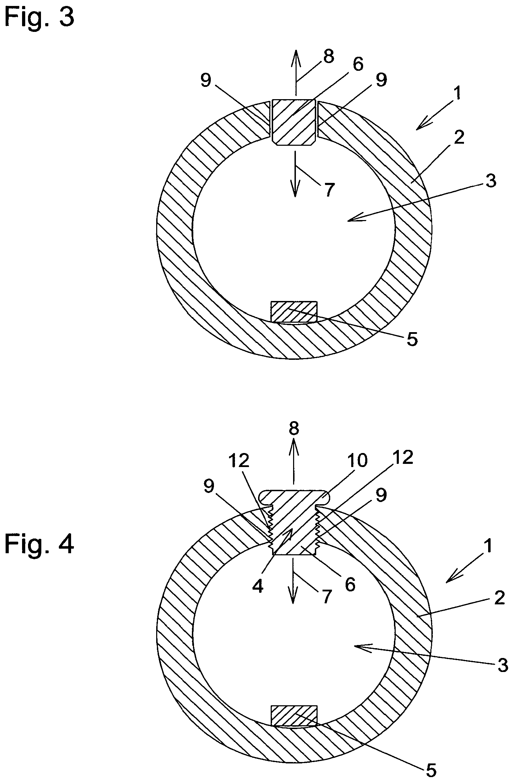

All diese Varianten stehen auch bei den nachfolgend geschilderten Ausführungsbeispielen gemäß der Fig. 3 bis 7 zur Verfügung, auch wenn hierauf im Folgenden nicht mehr konkret eingegangen wird und der Trägerkörper 22 in diesen Figuren nicht dargestellt ist.

Fig. 3 zeigt ein Ausführungsbeispiel, bei dem der Stopfen 6 ausschließlich stoffschlüssig am die Öffnung 4 umgebenden Rand 9 der Außenhülle befestigt ist. Der Stopfen 6 kann hierzu je nach Material der Außenhülle 2 an den Rand 9 angeklebt, anvulkanisiert oder mittels eines Schmelzprozesses daran befestigt sein. Die Verbindung zwischen Stopfen 6 und Rand 9 ist jedenfalls auch hier so ausgeführt, dass der Stopfen 6 weder in Richtung 7 in den Hohlraum 3 hinein noch in Richtung 9 aus dem Hohlraum 3 hinaus aus der Öffnung 4 herausgedrückt werden kann.

Fig. 4 zeigt eine Variante, bei der der Stopfen 6 wiederum formschlüssig am Rand 9 der Außenhülle 2 befestigt ist. Im Ausführungsbeispiel gemäß Fig. 4 erfolgt dies über ein Gewinde 12 am Stopfen 6 und im Rand 9 der Außenhülle 2. Ein entsprechendes Gewinde 12 kann vor dem Eindrehen des Stopfens 6 in die Öffnung 4 an diesen beiden Teilen vorab bereits vorgesehen sein. Es reicht aber auch aus, dieses Gewinde 12 an nur einem der beiden Teile, also am Stopfen 6 oder am Rand 9 vorab herzustellen, sodass das Gewinde beim Eindrehen des Stopfens 6 in den Rand 9 in das jeweils andere Teil eingeschnitten wird. Günstigerweise wird das Gewinde 12 zumindest am härteren der beiden genannten Teile angebracht. Zum Eindrehen des Stopfens 6 kann an diesem ein Eingriffs- oder Angriffsbereich für ein Werkzeug wie ein Schraubenzieherschlitz, ein Außenmehrkant oder ein innenmehrkant vorgesehen sein. Im gezeigten Ausführungsbeispiel gemäß Fig. 4 ist zusätzlich auch ein Kragen 10 am Stopfen 6 vorgesehen. Dieser kann grundsätzlich aber auch entfallen, da mit dem Gewinde 12 allein in der Regel schon sichergestellt ist, dass der Stopfen 6, wenn er in der Öffnung 4 angeordnet ist, sowohl in Richtung 7 in den Hohlraum 3 hinein als auch in Richtung 8 aus dem Hohlraum 3 hinaus, an dem die Öffnung 4 umgebenden Rand 9 der Außenhülle 2 ausreichend gut befestigt ist.

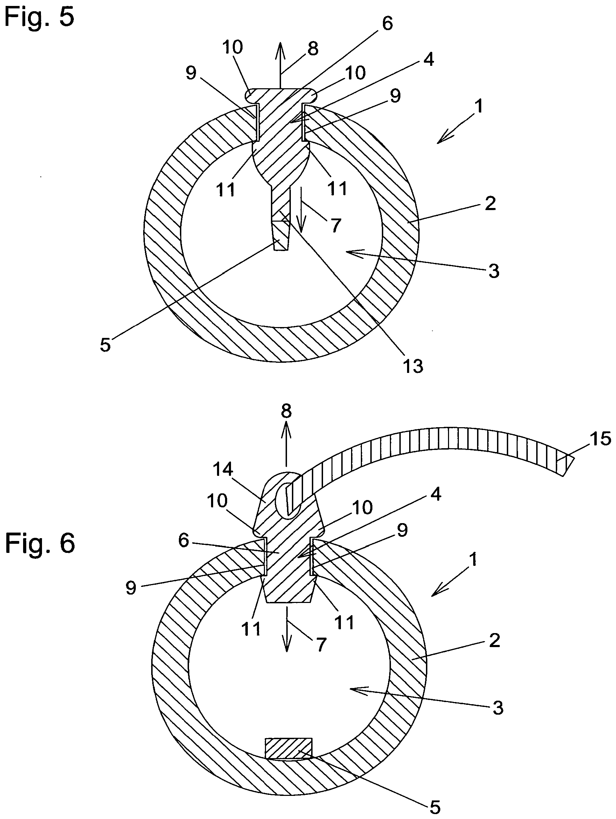

Fig. 5 zeigt eine erfindungsgemäße Variante, basierend auf dem Ausführungsbeispiel gemäß Fig. 2. Hier ist der Körper aus magnetischem bzw. magnetisierbarem Material 5 nicht wie in den anderen Ausführungsbeispielen frei beweglich sondern an einem Fortsatz 13 des Stopfens 6 und damit am Stopfen 6 selbst befestigt. Der Fortsatz 13 kann gegebenenfalls auch weggelassen oder unterschiedlich lang ausgebildet werden. Der magnetische bzw. magnetisierbare Körper 5 ist jedenfalls günstigerweise, wie in Fig. 5 auch gezeigt, möglichst mittig im Hohlraum 3 angeordnet. Er kann starr am Fortsatz 13 bzw. am Stopfen 6 befestigt sein, wie dies hier in der einfachen Variante gemäß Fig. 5 auch realisiert ist. Der Stopfen 6 bzw. der Fortsatz 13 könnte aber auch einen Innenhohlraum aufweisen, in dem ein entsprechender Körper 5 aus magnetischem oder magnetisierbarem Material wiederum frei beweglich gelagert ist, um sich in der Polung eines äußeren Magnetfeldes, z. B. eines Trägerkörpers 22 ausrichten zu können. Bei einer starren Befestigung des Körpers 5 am Stopfen 6 bzw. am Fortsatz 13 ist der Körper 5 günstigerweise aus magnetisierbarem Material ausgebildet, um Fehlpolungen zu vermeiden.

Die formschlüssige Befestigung des Stopfens 6 an dem die Öffnung 4 umgebenden Rand 9 der Außenhülle 2 in Fig. 5 ist analog zu den Ausführungsbeispielen gemäß Fig. 1 und 2 ausgebildet und muss nicht noch einmal erläutert werden. Dies gilt auch für die Fig. 6 und 7, welche ebenfalls, wenn auch anders als in Fig. 5 geartete Abwandlungsformen der Variante gemäß Fig. 2 darstellen.

Die Fig. 6 und 7 zeigen Ausgestaltungsformen, bei denen im oder am Stopfen 6 eine Befestigungsvorrichtung 14 zum Befestigen eines außerhalb der Außenhülle 2 anordenbaren, vorzugsweise flexiblen, Griffelementes 15 angeordnet ist. In der Variante gemäß Fig. 6 weist der Stopfen 6 als Befestigungsvorrichtung 14 eine an der Außenseite angeordnete Öse auf, durch die ein entsprechendes Griffelement 15, hier schematisiert in Form einer Bandschlinge gezeichnet, befestigt werden kann.

In Fig. 7 weist der Stopfen 6 als Befestigungsvorrichtung 14 einen in Längsrichtung des Stopfens 6 durch diesen hindurchgeführten Kanal auf, durch den ein hier als flexibles Griffelement 15 verwendetes Seil hindurchgeführt ist. Damit das Griffelement 15 nicht aus dem die Befestigungsvorrichtung 14 bildenden Kanal herausrutschen kann, sind seine Enden verknotet.

Bei der Beschreibung der Ausführungsbeispiele 2 bis 7 wurde, um Wiederholungen zu vermeiden, jeweils im Wesentlichen immer nur auf die Änderungen gegenüber den vorab geschilderten Ausführungsbeispielen eingegangen. Die gegenüber den vorab genannten Ausführungsbeispielen unveränderten Merkmale können dabei jeweils wie in den vorausgehend beschriebenen Ausführungsbeispielen ausgeführt sein. Insbesondere können die einzelnen Merkmale der hier gezeigten Ausführungsbeispiele aber auch anders miteinander kombiniert werden, um weitere erfindungsgemäße Beispiele von Ausführungsformen der Erfindung zu erzeugen. So kann z.B. eine stoffschlüssige Verbindung zwischen dem Stopfen 6 und dem Rand 9 der Außenhülle 2 auch als zusätzliche Befestigungsart in den Ausführungsbeispielen ausgeführt werden, bei denen eine formschlüssige Befestigung des Stopfens 6 an dem die Öffnung 4 umgebenden Rand 9 der Außenhülle 2 vorgesehen ist. Wie Fig. 4 beispielhaft zeigt, können an anderweitig bereits befestigten Stopfen 6 auch zusätzlich entsprechende Krägen 10 vorgegeben sein, um zumindest in eine der beiden Richtungen 7 und 8 eine zusätzliche formschlüssige Abstützung zu erreichen. Die erfindungsgemäße Variante der Befestigung des magnetischen bzw. magnetisierbaren Körpers 5 am Stopfen 6 bzw. dessen Fortsatzes 13 kann letztendlich bei allen anderen hier gezeigten Ausführungsbeispielen anstelle des frei beweglichen Körpers 5 im Hohlraum 3 realisiert werden.

### Legende zu den Hinweisziffern:

- 1: Hohlkörper
- 2: Außenhülle
- 3: Hohlraum
- 4: Öffnung
- 5: Körper
- 6: Stopfen
- 7: Richtung
- 8: Richtung
- 9: Rand
- 10: Kragen
- 11: Kragen
- 12: Gewinde
- 13: Fortsatz
- 14: Befestigungsvorrichtung
- 15: Griffelement
- 16: Trägerkörperbauteil
- 17: Trägerkörperbauteil
- 18: Magnet
- 19: Schutzhülle
- 20: Lösegriff
- 21: Stück der Kleidung
- 22: Trägerkörper

## Patentansprüche

1. Hohlkörper (1), geeignet für das Hineinbeißen seitens eines Hundes, mit zumindest einer Außenhülle (2) und zumindest einem von der Außenhülle (2) umgebenen Hohlraum (3) und mit zumindest einer von außen in den Hohlraum (3) hineinführenden Öffnung (4) in der Außenhülle (2), wobei die Öffnung (4) verschlossen ist und im Hohlraum (3) zumindest ein magnetischer oder magnetisierbarer Körper (5) angeordnet ist, **dadurch gekennzeichnet, dass** die Öffnung (4) mit einem Stopfen (6) verschlossen ist, welcher sowohl in Richtung (7) in den Hohlraum (3) hinein als auch in Richtung (8) aus dem Hohlraum (3) hinaus an dem die Öffnung (4) umgebenden Rand (9) der Außenhülle (2) befestigt ist, und der magnetische oder magnetisierbare Körper (5) am Stopfen (6), vorzugsweise an einem in den Hohlraum (3) hineinreichenden Fortsatz des Stopfens (6), fixiert ist.

2. Hohlkörper (1) nach Anspruch 1, **dadurch gekennzeichnet, dass** der die Öffnung (4) verschließende Stopfen (6) am die Öffnung (4) umgebenden Rand (9) der Außenhülle (2) formschlüssig und/oder stoffschlüssig befestigt ist.

3. Hohlkörper (1) nach Anspruch 1 oder 2, **dadurch gekennzeichnet, dass** der Stopfen (6) zwei miteinander verbundene und voneinander beabstandete Krägen (10, 11) aufweist und der die Öffnung (4) umgebende Rand (9) der Außenhülle (2) zwischen den Krägen (10, 11) formschlüssig gehalten ist.

4. Hohlkörper (1) nach einem der Ansprüche 1 bis 3, **dadurch gekennzeichnet, dass** der Stopfen (6) und/oder der die Öffnung (4) umgebende Rand (9) der Außenhülle (2) zumindest ein Gewinde (12) aufweist und der Stopfen (6) und die Außenhülle (2) mittels des Gewindes (12) formschlüssig aneinander befestigt sind.

5. Hohlkörper (1) nach einem der Ansprüche 1 bis 4, **dadurch gekennzeichnet, dass** der die Öffnung (4) verschließende Stopfen (6) an den die Öffnung (4) umgebenden Rand (9) der Außenhülle (2) angeklebt oder anvulkanisiert oder in diesen eingeschmolzen ist.

6. Hohlkörper (1) nach einem der Ansprüche 1 bis 5, **dadurch gekennzeichnet, dass** der Stopfen (6) ein Kunststoffteil, vorzugsweise ein Kunststoffspritzgussteil, ist.

7. Hohlkörper (1) nach einem der Ansprüche 1 bis 6, **dadurch gekennzeichnet, dass** die Außenhülle (2) eine, vorzugsweise flexible, Kunststoffhülle oder Gummihülle ist.

8. Hohlkörper (1) nach einem der Ansprüche 1 bis 7, **dadurch gekennzeichnet, dass** der Hohlkörper (1) ein Ball ist.

9. Hohlkörper (1) nach einem der Ansprüche 1 bis 8, **dadurch gekennzeichnet, dass** im oder am Stopfen (6) eine Befestigungsvorrichtung (14) zum Befestigen eines außerhalb der Außenhülle (2) anordenbaren, vorzugsweise flexiblen, Griffelements (15) angeordnet ist.

## Claims

1. Hollow body (1), suitable for being bitten into by a dog, having at least one outer shell (2) and at least one cavity (3) surrounded by the outer shell (2), and having at least one opening (4) in the outer shell (2) that leads into the cavity (3) from outside, wherein the opening (4) is closed and at least one magnetic or magnetizable body (5) is arranged in the cavity (3), **characterized in that** the opening (4) is closed by a stopper (6) which, both in a direction (7) into the cavity (3) and in a direction (8) out of the cavity (3), is fastened to the edge (9) of the outer shell (2) that surrounds the opening (4), and the magnetic or magnetizable body (5) is fixed to the stopper (6), preferably to an extension of the stopper (6) that extends into the cavity (3).

2. Hollow body (1) according to claim 1, **characterized in that** the stopper (6) that closes the opening (4) is fastened in a form-fitting and/or materially bonded manner to the edge (9) of the outer shell (2) that surrounds the opening (4).

3. Hollow body (1) according to claim 1 or 2, **characterized in that** the stopper (6) comprises two collars (10, 11) which are connected to each other and spaced apart from each other, and the edge (9) of the outer shell (2) that surrounds the opening (4) is held in a form-fitting manner between the collars (10, 11) .

4. Hollow body (1) according to any one of claims 1 to 3, **characterized in that** the stopper (6) and/or the edge (9) of the outer shell (2) that surrounds the opening (4) has at least one thread (12), and the stopper (6) and the outer shell (2) are fastened to each other in a form-fitting manner by means of the thread (12).

5. Hollow body (1) according to any one of claims 1 to 4, **characterized in that** the stopper (6) that closes the opening (4) is glued to or vulcanized onto or molten into the edge (9) of the outer shell (2) that surrounds the opening (4).

6. Hollow body (1) according to any one of claims 1 to 5, **characterized in that** the stopper (6) is a plastic part, preferably an injection-moulded plastic part.

7. Hollow body (1) according to any one of claims 1 to 6, **characterized in that** the outer shell (2) is a plastic shell or rubber shell, which is preferably flexible.

8. Hollow body (1) according to any one of claims 1 to 7, **characterized in that** the hollow body (1) is a ball.

9. Hollow body (1) according to any one of claims 1 to 8, **characterized in that** a fastening device (14) for fastening a grip element (15) is arranged in or on the stopper (6), which grip element is preferably flexible and can be arranged outside the outer shell (2).

## Revendications

1. Corps creux (1) adapté pour être mordu par un chien, avec au moins une enveloppe extérieure (2) et au moins un espace creux (3) entouré par l'enveloppe extérieure (2), et avec au moins une ouverture (4) dans l'enveloppe extérieure (2) menant de l'extérieur dans l'espace creux (3), l'ouverture (4) étant fermée et au moins un corps magnétique ou magnétisable (5) étant disposé dans l'espace creux (3), **caractérisé en ce que** l'ouverture (4) est fermée par un bouchon (6) qui est fixé au bord (9) de l'enveloppe extérieure (2) entourant l'ouverture (4) aussi bien dans la direction (7) vers l'intérieur de l'espace creux (3) que dans la direction (8) vers l'extérieur de l'espace creux (3), et le corps magnétique ou magnétisable (5) est fixé au bouchon (6), de préférence à un prolongement du bouchon (6) qui s'étend dans l'espace creux (3).

2. Corps creux (1) selon la revendication 1, **caractérisé en ce que** le bouchon (6) fermant l'ouverture (4) est fixé par complémentarité de forme et/ou par liaison de matière au bord (9) de l'enveloppe extérieure (2) entourant l'ouverture (4).

3. Corps creux (1) selon la revendication 1 ou 2, **caractérisé en ce que** le bouchon (6) présente deux collerettes (10, 11) reliées entre elles et espacées l'une de l'autre, et le bord (9) de l'enveloppe extérieure (2) entourant l'ouverture (4) est maintenu entre les collerettes (10, 11) par complémentarité de forme.

4. Corps creux (1) selon l'une des revendications 1 à 3, **caractérisé en ce que** le bouchon (6) et/ou le bord (9) de l'enveloppe extérieure (2) entourant l'ouverture (4) présentent au moins un filetage (12), et le bouchon (6) et l'enveloppe extérieure (2) sont fixés l'un à l'autre par complémentarité de forme au moyen du filetage (12).

5. Corps creux (1) selon l'une des revendications 1 à 4, **caractérisé en ce que** le bouchon (6) fermant l'ouverture (4) est collé ou vulcanisé sur le bord (9) de l'enveloppe extérieure (2) entourant l'ouverture (4), ou est fondu dans celui-ci.

6. Corps creux (1) selon l'une des revendications 1 à 5, **caractérisé en ce que** le bouchon (6) est une pièce en matière plastique, de préférence une pièce en matière plastique moulée par injection.

7. Corps creux (1) selon l'une des revendications 1 à 6, **caractérisé en ce que** l'enveloppe extérieure (2) est une enveloppe en matière plastique, de préférence flexible, ou une enveloppe en caoutchouc.

8. Corps creux (1) selon l'une des revendications 1 à 7, **caractérisé en ce que** le corps creux (1) est une balle.

9. Corps creux (1) selon l'une des revendications 1 à 8, **caractérisé en ce qu'**un dispositif de fixation (14) est disposé dans ou sur le bouchon (6) pour fixer un élément de préhension (15), de préférence flexible, pouvant être disposé à l'extérieur de l'enveloppe extérieure (2).
